# EUROPÄISCHE PATENTSCHRIFT

(11) **EP 3 871 885 B1**
(45) Veröffentlichungstag und Bekanntmachung des Hinweises auf die Patenterteilung: **01.01.2025**
(21) Anmeldenummer: 21157992.5
(22) Anmeldetag: 18.02.2021
(51) Int. Cl.: B41F 33/00, B65H 26/00

(54) **BAUTEIL MIT VERSCHLEISSANZEIGE**
COMPONENT WITH WEAR INDICATOR
COMPOSANT AVEC INDICATEUR D'USURE

(30) Priorität: 25.02.2020 DE 102020104909
(43) Veröffentlichungstag der Anmeldung: 01.09.2021
(73) Patentinhaber: manroland Goss web systems GmbH, 86153 Augsburg (DE)
(72) Erfinder: Dujmic, Zeljko, 86169 Augsburg (DE); Groth, Jan Hendrik, 86157 Augsburg (DE); Wiedemann, Marco, 86444 Affing (DE); Schwöpfinger, Andreas, New South Wales, New South Wales 2227 (AU)

(56) Entgegenhaltungen:
- EP-A2- 1 338 539
- DE-A1- 102008 040 600
- DE-U1- 202016 101 668
- DE-U1- 202016 106 362

## Beschreibung

Die Erfindung betrifft ein Bauteil zum Einsatz in Druckmaschinen oder Papier- und Substrat-verarbeitenden Maschinen, wobei das Bauteil mindestens einen ersten Bereich aus einem ersten Werkstoff mit ersten physikalischen Eigenschaften umfasst, und wobei der mindestens eine erste Bereich eine mit einem bahn- oder bogenförmigen Substrat in Kontakt befindliche, einem Verschleiß unterliegende Funktionsfläche umfasst, wobei der mindestens eine erste Bereich mindestens einen zweiten Bereich umfasst, wobei angrenzend an oder beabstandet zu der Funktionsfläche mindestens ein zweiter Bereich zumindest teilweise von dem ersten Bereich umschlossen ist.

Bei Druckmaschinen oder bei Papier- oder Substrat-verarbeitenden Maschinen, wie beispielsweise bei in Druckmaschinen integrierten Falzwerken, getrennt von Druckmaschinen arbeitende Falzgeräten, Ablegern, Staplern oder sonstigen Geräten, welche bahn- oder bogenförmiges Substrat in gefalzter oder ungefalzter Form verarbeiten, kommen gewisse Bauteile insofern mit dem zu verarbeitetenden Substrat, wie beispielsweise Papier derart in Kontakt, dass zwischen mindestens einer Funktionsfläche eines Bauteils und dem Substrat eine Relativbewegung stattfindet. Derartige Funktionsflächen unterliegen einem Verschleiß, da durch die Relativbewegung zwischen der Funktionsfläche und dem sich darauf bewegendem Substrat über einen mehr oder weniger langen Zeitraum die mindestens eine Funktionsfläche abgetragen wird. Zwar sind aus dem Stand der Technik relativ verschleißbeständige Beschichtungen bekannt, teilweise sind diese aber auch anfällig bezüglich dem Ablegen von Farbe oder ziehen hohe Herstellkosten nach sich.

Bei entsprechend starkem Verschleiß von Funktionsflächen ändert sich die Geometrie im Bereich der Funktionsfläche des Bauteils, so dass entweder die Funktionalität des Bauteils und somit der gesamten Komponente nicht mehr vollumfänglich sichergestellt ist, oder durch entsprechenden Verschleiß verringern sich die Wandstärken und Querschnitte, so dass stark verschlissene Teile auch zu Bruch gehen können.

Aus dem Stand der Technik sind einerseits eine Vielzahl von verschleißresistenten oder verschleißhemmenden Beschichtungen bekannt, welche jedoch aufgrund der hohen Relativgeschwindigkeiten von bis zu 20 Meter pro Sekunde insbesondere bei sehr abrasiven Substraten den Verschleiß zumeist nur verzögern. Sobald eine derartige Verschleiß-hemmende Beschichtung zumindest partiell abgenutzt ist, verschleißt das im Vergleich zur Beschichtung relativ weiche Material ebenso schnell. Für den Bediener oder für das Wartungspersonal ist somit nicht feststellbar, wann ein Grad an Verschleiß erreicht ist, ab welchem die Funktionalität, die Leistungsfähigkeit oder die Betriebssicherheit erfahrungsgemäß beeinträchtigt ist.

Aus der EP 3 222 568 B1, aus der DE 20 2016 101 668 U1 oder aus der DE 20 2016 106 362 U1 sind Bremsbürsten mit Bürstenbesatz bekannt, bei welcher zur Indikation des Verschleißes des Bürstenbesatzes der Bürstenkörper zumindest partiell mindestens einen Überstand aufweist, welcher in Erstreckung der Besatzdicke mit einer Überstandshöhe über die Besatzfläche hinausragt. Bei beginnendem Verschleiß des Überstandes erkennt der Bediener oder das Wartungspersonal, dass zur Sicherstellung einer uneingeschränkten Funktionalität Bürsten mit entsprechend verschlissenem Bürstenbesatz auszutauschen sind.

Derartige Überstände sind jedoch an Funktionsflächen ohne Bürstenbesatz, welche mit Substraten in Kontakt stehen, aufgrund der Gefahr der Beschädigung für das Substrat in der Regel gänzlich ungeeignet.

Die DE 10 2008 040 600 A1 offenbart eine Walze mit einer Mantelfläche aus einem aufgewickelten Profil, welches nach außen hin offene Rillen bildet, wobei zur Erkennung eines Verschleißgrades von außen in die Rillen Erhöhungen mit einem definierten wirksamen Durchmesser eingebracht werden.

Die EP 1 338 539 A2 offenbart ein einem Verschleiß unterliegende Bandleitung in einem Falzwerk, wobei zur automatischen Verschleißerkennung die Bandleitung entweder eine auf der Oberfläche aufgebrachte Einlage oder eine in das Band eingebrachte Einlage mit abweichenden Eigenschaften gegenüber dem Bandleitungsmaterial aufweist, so dass durch Abtragung oder durch Freilegung der Einlage Veränderungen detektiert werden können.

Der Erfindung liegt daher die Aufgabe zugrunde, eine Lösung zu schaffen, mit welcher das Erreichen von Verschleißgraden oder auch von Verschleißgrenzen ohne Zuhilfenahme von Hilfsmitteln leicht festgestellt werden kann.

Die Aufgabe wird durch ein Bauteil gemäß Anspruch 1 gelöst. Das erfindungsgemäße Bauteil zeichnet sich dadurch aus, dass der mindestens eine zweite Bereich als Hohlraum ausgestaltet ist.

Eine derartige Ausführung hat den Vorteil, dass ohne Zuhilfenahme zusätzlicher Mittel erkannt werden kann, ob die Funktionsfläche eines Bauteiles ein kritisches Maß an Verschleiß erreicht hat. Ferner ist es auch möglich, dem Bediener einen Hinweis auf unterschiedliche Verschleißgrade anzuzeigen, so dass rechtzeitig entsprechende Ersatzteile beschafft werden können.

Durch Einsatz neuer Fertigungsverfahren wie insbesondere dem als additive Fertigung oder 3D-Druck bekannten Verfahren ist es insbesondere möglich, derartige Bauteile schnell, kostengünstig und im Falle des Einbringens von Material in den zweiten Bereichen ohne Schwächung der mechanischen Festigkeitseigenschaften derartige Bauteile herzustellen. Allerdings sind erfindungsgemäße Bauteile nicht zwingend auf ein additives Herstellungsverfahren begrenzt, doch zweifelsohne sind diverse Ausgestaltungen eines derartigen Bauteiles aufgrund der grundsätzlichen Homogenität der mechanischen Eigenschaften für das 3D-Druckverfahren prädestiniert.

Erfindungsgemäß ist der zweite Bereich als Hohlraum ausgestaltet. Bei entsprechendem Verschleiß einer Funktionsfläche wird somit der zweite Bereich freigelegt. Da derartige kleine Hohlräume auf der Funktionsfläche noch keine Probleme verursachen, kann so ebenfalls per Augenschein erkannt werden, ob ein entsprechendes Maß an Verschleiß aufgetreten ist.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: eine beispielhafte Darstellung eines Bauteiles umfassend eine beispielhafte Funktionsfläche und eine Mehrzahl von zweiten Bereichen
- Fig. 2: eine beispielhafte Darstellung eines Bauteiles umfassend eine beispielhafte Funktionsfläche und einen zweiten Bereich
- Fig. 3a: eine Draufsicht des in Fig. 2 gezeigten Bauteils in einer ersten Ausgestaltung
- Fig. 3b: eine Draufsicht des in Fig. 2 gezeigten Bauteils in einer zweiten Ausgestaltung
- Fig. 3c: eine Draufsicht des in Fig. 2 gezeigten Bauteils in einer dritten Ausgestaltung
- Fig. 4: ein erfindungsgemäßes Bauteil in Schnittdarstellung mit einem über seine Erstreckung mit variablem Abstand zur Funktionsfläche ausgebildeten zweiten Bereich
- Fig. 5: eine Schnittdarstellung des in Fig. 4 gezeigten Bauteils

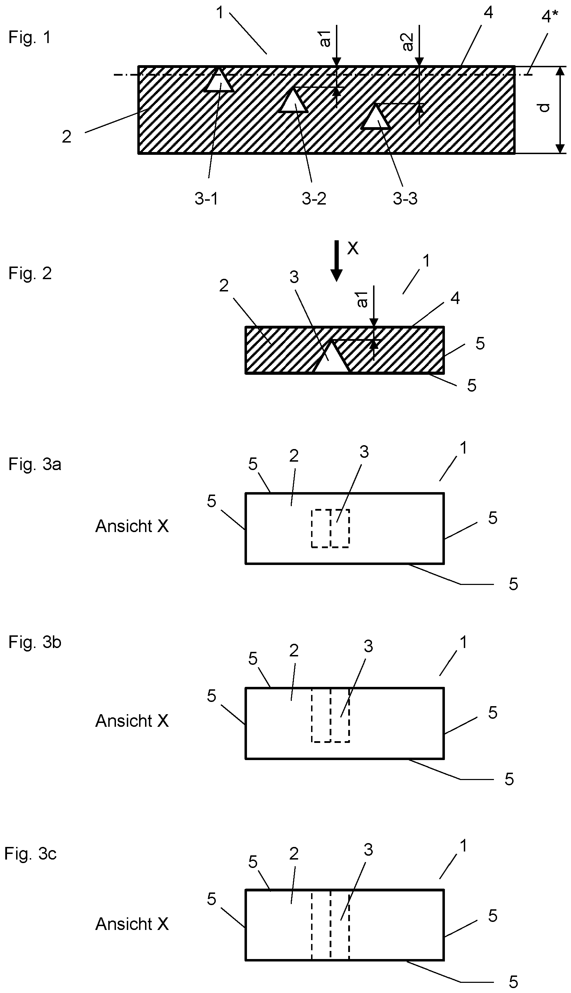

Fig. 1 zeigt ein beispielhaftes Bauteil 1, welches einen ersten Bereich 2 und beispielhaft eine Funktionsfläche 4 umfasst. Es wird an dieser Stelle pauschal darauf hingewiesen, dass alle Figuren 1 bis 5 entsprechende an Druckmaschinen oder an Papier- oder Substrat-verarbeitenden Maschinen eingesetzte Bauteile 1 nur rein schematisch darstellen. In der Praxis eingesetzte derartige Bauteile 1 weisen zumeist komplexe Geometrien mit nicht nur einer ebenen Funktionsfläche 4 auf. Desweiteren zeigen die in den Fig. 1 bis 5 dargestellten Bauteile 1 aus Gründen der einfacheren und verständlicheren Darstellung nur eine einzige Funktionsfläche 4, wenngleich die vorliegende Erfindung auch grundsätzlich Teile mit einer Mehrzahl von Funktionsflächen 4 umfasst.

Das in Fig. 1 symbolisch dargestellte Bauteil 1 ist nur mit einem aus einem ersten Werkstoff ausgebildeten ersten Bereich 2 dargestellt, welcher die in Kontakt mit einem nicht dargestellten Substrat befindliche Funktionsfläche 4 ausbildet. Auch wenn in keiner der Figuren 1 bis 5 ein Bauteil 1 dargestellt ist, welches einen zusätzlichen dritten Bereich, beispielsweise ein zur Aufnahme oder Montage des ersten Bereichs 2 ausgebildeter dritter Bereich aus einem dritten Werkstoff umfasst, mit welchem der erste Bereich 2 verbunden ist, so umfasst die vorliegende Erfindung auch Bauteile 1, bei welchen beispielsweise der erste Bereich 2 aus einem ersten Werkstoff wie beispielsweise Kunststoff hergestellt ist, welche mit einem nicht dargestellten dritten Bereich aus einem dritten Werkstoff wie beispielsweise Stahl oder Aluminium zur Befestigung in der Substrat-verarbeitenden Maschine verbunden sind.

Das in Fig. 1 beispielhaft dargestellte Bauteil 1 umfasst einen ersten Bereich 2, welcher aus einem ersten Werkstoff gefertigt ist. Der erste Bereich 2 umfasst mindestens eine mit einem bahn- oder bogenförmigen Substrat in Kontakt befindliche Funktionsfläche 4, welche aufgrund ihres Kontaktes mit dem zu verarbeitenden Substrat einem Verschleiß ausgesetzt ist.

Die Fig. 1 ist eine Schnittdarstellung des Bauteiles 1 mit einer senkrecht zur Funktionsfläche 4 angeordneten Schnittebene und ermöglicht so einen Einblick in das erfindungsgemäße Bauteil 1.

Wie dieser in Fig. 1 dargestellten Schnittdarstellung des Bauteiles 1 entnommen werden kann, umfasst der erste Bereich 2 eine Mehrzahl von zweiten Bereichen 3, welche zumindest teilweise von dem ersten Bereich 2 umschlossen sind und angrenzend oder beabstandet zu der mindestens einen Funktionsfläche 4 angeordnet sind.

So umfasst der erste Bereich 2 einen ersten zweiten Bereich 3-1, welcher im Wesentlichen unmittelbar an die Funktionsfläche 4 angrenzt oder nur sehr gering von der Funktionsfläche 4 beabstandet ist. Ferner umfasst der erste Bereich 2 einen zweiten zweiten Bereich 3-2, welcher mit dem Abstand a1 etwas weiter als der erste zweite Bereich 3-1 von der Funktionsfläche 4 beabstandet ist, und einen dritten zweiten Bereich 3-3, welcher mit dem Abstand a2 etwas weiter als der zweite zweite Bereich 3-2 von der Funktionsfläche 4 beabstandet ist. Wie aus der Schnittdarstellung durch das Bauteil 1 ersichtlich ist, sind die zweiten Bereiche 3-1, 3-2 und 3-3 zumindest teilweise von dem ersten Bereich 2 umschlossen.

Das erfindungsgemäße in Fig. 1 dargestellte Bauteil 1 umfasst somit einen ersten Bereich 2 und eine Mehrzahl von zweiten Bereichen 3, wobei mindestens zwei zweite Bereiche 3 einen voneinander unterschiedlichen Abstand a zur Funktionsfläche 4 aufweisen.

Wenngleich in Fig. 1 beispielhaft eine Ausgestaltung mit drei zweiten Bereichen 3-1, 3-2, 3-3 dargestellt ist, so ist die vorliegende Erfindung mit einer beliebigen Anzahl von zweiten Bereichen 3 möglich, beispielsweise auch nur mit einem zweiten Bereich 3.

Verschleißt die Funktionsfläche 4, so verringert sich die Bauteildicke d und die so von der ursprünglichen Lage abweichende Funktionsfläche 4* schneidet zumindest partiell einen zweiten Bereich 3, in der beispielhaften Darstellung gemäß Fig. 1 schneidet die durch Verschleiß entstandene Funktionsfläche 4* zunächst den ersten zweiten Bereich 3-1.

Somit bildet mindestens ein zweiter Bereich 3, im vorliegenden Beispiel der Fig. 1 ist dies zunächst der erste zweite Bereich 3-1, bei entsprechendem Verschleiß mindestens einer Funktionsfläche 4 zumindest teilweise einen Bestandteil der in der Lage verschobenen Funktionsfläche 4 beziehungsweise 4*.

Selbiges tritt auch ein, wenn die in Fig. 1 dargestellte Funktionsfläche 4 nicht gleichmäßig verschleißt, sondern beispielsweise im linken Bereich der in Fig. 1 dargestellten Funktionsfläche 4 stärker verschleißt, als im restlichen Bereich. In diesem Fall wird auch der erste zweite Bereich 3-1 als erster der zweiten Bereiche 3 Bestandteil der Funktionsfläche 4 bzw. 4*.

In einer beispielhaften Ausgestaltung besteht der mindestens eine zweite Bereich 3 aus einem zweiten Werkstoff mit zweiten physikalischen Eigenschaften. Dieser zweite Werkstoff des zweiten Bereiches 3 unterscheidet sich in mindestens einer Eigenschaft von dem ersten Werkstoff, aus welchem der erste Bereich 2 hergestellt ist.

In einer beispielhaften Ausgestaltung weist der zweite Werkstoff des mindestens einen zweiten Bereiches 3 zweite physikalische Eigenschaften auf, welche sich von den ersten Eigenschaften des ersten Werkstoffes des ersten Bereiches 2 unterscheiden, als dass der zweite Werkstoff andere optische Eigenschaften und/oder ein unterschiedliches Reflexionsverhalten aufweist. Dies bedeutet beispielsweise, dass aufgrund der Reflexion anderer Wellenlängenbereiche des sichtbaren Lichts der mindestens eine zweite Bereich 3 eine unterschiedliche Farbe als der Werkstoff des ersten Bereichs 2 aufweist.

Am Beispiel der in Fig. 1 dargestellten Ausführungsform ist es auch möglich, dass nicht alle zweiten Bereiche 3-1, 3-2, 3-3 dieselbe Farbe und somit die selben optischen Eigenschaften haben, sondern dass mindestens einer der zweiten Bereiche 3-1, 3-2, 3-3 eine von den restlichen zweiten Bereichen 3-1, 3-2, 3-3 abweichende Farbe aufweist, oder dass ein jeder der Mehrzahl der zweiten Bereiche 3-1, 3-2, 3-3 eine unterschiedliche Farbe aufweist.

So kann anhand der Farbe der freigelegten zweiten Bereiche 3 erkannt werden, welchen Verschleißgrad die Funktionsfläche 4 des Bauteils 1 bei der Begutachtung inne hat.

An dem in Fig. 1 dargestelltem Beispiel könnte beispielsweise der erste zweite Bereich 3-1 aus einem weiß eingefärbten Werkstoff hergestellt sein, so dass nach entsprechender Betriebsdauer ein erster Verschleiß der durch den beispielsweise schwarz eingefärbten Werkstoff des ersten Bereichs 2 ausgebildete Funktionsfläche 4 erkennbar ist.

Ist der zweite zweite Bereich 3-2 beispielsweise gelb eingefärbt, so kann bei Sichtbarwerden des gelb eingefärbten zweiten zweiten Bereiches 3-2 ein fortschreitender Verschleiß festgestellt werden, wenngleich beispielsweise in diesem Stadium die Funktionalität des Bauteils 1 noch vollumfänglich gewährleistet ist. Allerdings kann mit Freilegen des gelb eingefärbten zweiten zweiten Bereiches 3-2 die Empfehlung verbunden sein, ein entsprechendes Bauteil 1 zu bevorraten oder die Lagerbestände zu überprüfen.

Ist der dritte zweite Bereich 3-3 beispielsweise rot eingefärbt, so kann bei Sichtbarwerden des rot eingefärbten dritten zweiten Bereiches 3-3 ein stark fortgeschrittener Verschleiß festgestellt werden, bei welchem beispielsweise die Funktionalität des Bauteils 1 nur noch zeitlich eingeschränkt und/oder nur noch eingeschränkt gewährleistet ist. Somit kann mit Freilegen des rot eingefärbten dritten zweiten Bereiches 3-3 die Empfehlung verbunden sein, ein entsprechendes Bauteil 1 auszutauschen oder mindestens die Funktionalität zu überprüfen und/oder einen Tausch des Bauteiles 1 zumindest innerhalb eines gewissen Zeitraumes einzuplanen.

Erfindungsgemäß ist der mindestens eine zweite Bereich 3 als ein Hohlraum ausgestaltet.

Insbesondere durch additive Herstellungsverfahren, auch als 3D-Druck bezeichnet, ist es verfahrensbedingt möglich, derartige Hohlräume mit geringen Abmessungen und genau definierter geometrischer Gestalt und Anordnung auch zur Funktionsfläche 4 herzustellen, auch wenn der als Hohlraum ausgebildete zweite Bereich 3 vollständig vom ersten Bereich 2 umschlossen ist.

Ein derartiger als Hohlraum ausgestalteter zweiter Bereich 3 kann, wie beispielsweise in Fig. 1 dargestellt, vollständig in den ersten Bereich 2 eingeschlossen sein.

Wenngleich nicht in Fig. 1 dargestellt, so ist es auch möglich, bei einer Mehrzahl von zweiten Bereichen 3 mindestens einen zweiten Bereich 3, beispielweise den ersten zweiten Bereich 3-1, als Hohlraum auszugestalten und mindestens einen weiteren zweiten Bereich 3, beispielsweise den zweiten zweiten Bereich 3-2 und den dritten zweiten Bereich 3-3 mit einem vom ersten Werkstoff des ersten Bereiches 2 unterschiedlichem zweiten Werkstoff oder mehreren unterschiedlichen zweiten Werkstoffen auszugestalten.

Wenngleich in Fig. 1 nur eine Schnittdarstellung des Bauteiles 1 dargestellt ist, so kann mindestens ein zweiter Bereich 3 oder der eine zweite Bereich 3 gemäß der Darstellung in Fig. 3a vollständig vom ersten Bereich 2 umschlossen sein.

Es ist auch möglich, dass mindestens ein zweiter Bereich 3 oder der eine zweite Bereich 3 bis zu mindestens einer Begrenzungsfläche 5 gemäß der Darstellung in Fig. 3b reicht.

Ferner ist es möglich, dass mindestens ein zweiter Bereich 3 oder der eine zweite Bereich 3 von einer ersten äußeren Begrenzungsfläche 5 des Bauteiles 1 zu einer zweiten, vorzugsweise zu der der ersten äußeren Begrenzungsfläche 5 gegenüberliegenden zweiten äußeren Begrenzungsfläche 5 gemäß der Darstellung in Fig. 3c reicht.

Bei einer Mehrzahl von zweiten Bereichen 3 ist eine Kombination aller vorgenannten Ausgestaltungen der zweiten Bereiche 3 möglich, sofern dies die Form und Funktion des Bauteiles 1 zulässt.

Fig. 2 zeigt vergleichbar zu Fig. 1 ebenfalls eine Schnittdarstellung durch ein erfindungsgemäßes Bauteil 1, bei welchem der zweite Bereich 3 sich bis zu mindestens einer von der mindestens einen Funktionsfläche 4 unterscheidenden Begrenzungsfläche 5 des Bauteils 1 oder des ersten Bereiches 2 erstreckt.

Bei dem in Fig. 2 dargestellten Beispiel umfasst der erste Bereich 2 lediglich einen zweiten Bereich 3, welcher mit dem Abstand a1 von der Funktionsfläche 4 beabstandet ist und einen in der Schnittebene dreieckigen Querschnitt aufweist.

Wenngleich nicht in Fig. 2 dargestellt, so ist es auch möglich, dass der zweite Bereich 3 nur minimal von der Funktionsfläche 4 beabstandet ist oder im Wesentlichen an diese angrenzt.

Wenngleich nicht in Fig. 2 dargestellt, so ist es auch möglich, dass der erste Bereich 2 eine Mehrzahl von zweiten Bereichen 3 aufweist. Diese Mehrzahl der zweiten Bereiche 3 kann sich entweder in Gänze bis zu mindestens einer Begrenzungsfläche 5 erstrecken, oder aber es erstreckt sich mindestens ein zweiter Bereich 3 bis zu einer äußeren Begrenzungsfläche 5 und mindestens ein weiterer zweiter Bereich 3 ist vollständig vom ersten Bereich 2 umschlossen.

In Fig. 2 ist ein Sonderfall dargestellt, bei welchem sich der mindestens eine zweite Bereich 3 bis zu einer der mindestens einen Funktionsfläche 4 gegenüberliegenden Begrenzungsfläche 5 des Bauteiles 1 beziehungsweise des ersten Bereichs 2 erstreckt.

Die Fig. 3a bis 3c zeigen jeweils eine Draufsicht des in Fig. 2 im Schnitt dargestellten Bauteiles 1, wenngleich in jeweils anderer Ausgestaltung.

Wenngleich in Fig. 2 nur eine Schnittdarstellung des Bauteiles 1 dargestellt ist, so kann sich mindestens ein zweiter Bereich 3 oder der eine zweite Bereich 3 gemäß der Darstellung in Fig. 3a ausschließlich bis zu der der Funktionsfläche 4 gegenüberliegenden Begrenzungsfläche 5 erstrecken.

Es ist auch möglich, dass mindestens ein zweiter Bereich 3 oder der eine zweite Bereich 3 bis zu mindestens einer Begrenzungsfläche 5 gemäß der Darstellung in Fig. 3b reicht.

Ferner ist es möglich, dass mindestens ein zweiter Bereich 3 oder der eine zweite Bereich 3 von einer ersten äußeren Begrenzungsfläche 5 des Bauteiles 1 zu einer zweiten, vorzugsweise zu der der ersten äußeren Begrenzungsfläche 5 gegenüberliegenden zweiten äußeren Begrenzungsfläche 5 gemäß der Darstellung in Fig. 3c reicht.

Bei einer Mehrzahl von zweiten Bereichen 3 ist eine Kombination aller vorgenannten Ausgestaltungen der zweiten Bereiche 3 möglich, sofern dies die Form und Funktion des Bauteiles 1 zulässt.

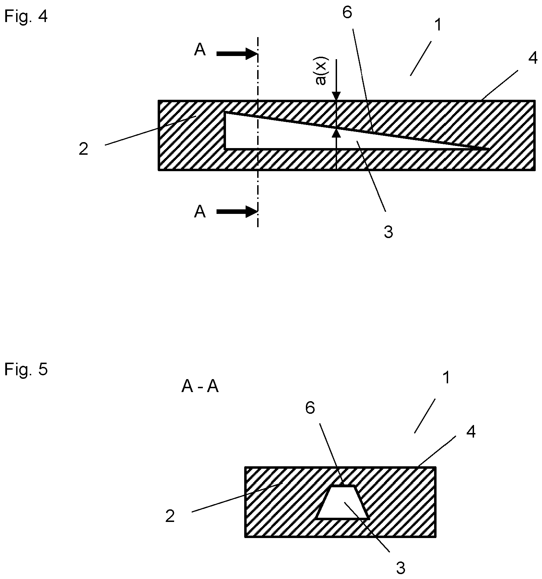

Fig. 4 zeigt eine weitere Ausgestaltung eines erfindungsgemäßen Bauteils 1, bei welcher der erste Bereich 2 mindestens einen zweiten Bereich 3 umfasst, welcher über seine Erstreckung eine zur Funktionsfläche 4 zugewandte Grenzfläche 6 zwischen dem mindestens einen zweiten Bereich 3 und dem ersten Bereich 2 ausbildet, wobei diese Grenzfläche 6 einen veränderlichen Abstand a zur Funktionsfläche 4 aufweist.

Insofern wird mit fortschreitendem Verschleiß der Funktionsfläche 4 ein immer größerer Teil des zweiten Bereiches 3 Bestandteil der Funktionsfläche 4, so dass anhand des Ausmaßes der Freilegung des mindestens einen zweiten Bereiches 3 der Grad des Verschleißes bestimmt werden kann.

Dieser mindestens eine zweite Bereich 3 kann entweder über seine Erstreckung eine mehr oder weniger gleichmäßige Höhe in Erstreckung des Abstandes a aufweisen, oder es ist auch möglich, wie in Fig. 5 dargestellt, dass der mindestens eine zweite Bereich 3 in der in Fig. 5 dargestellten Schnittebene einen veränderlichen Querschnitt aufweist.

Ferner ist es möglich, dass zumindest ein zweiter Bereich 3 in Abhängigkeit vom Abstand a zur Funktionsfläche 4 einen veränderlichen Querschnitt bezogen auf eine Schnittebene parallel zur Funktionsfläche 4 aufweist, wie in Fig. 5 dargestellt.

Insbesondere bei zweiten Bereichen 3 mit einer etwas größeren Ausdehnung in mindestens eine Dimension, wie beispielsweise in Fig. 4 dargestellt, ist es möglich, wenn mindestens einer dieser zweiten Bereiche 3 aus einer Werkstoffzusammensetzung besteht, welche in Abhängigkeit vom Abstand a beziehungsweise a(x) zur Funktionsfläche 4 unterschiedliche physikalische Eigenschaften, insbesondere unterschiedliche optische Eigenschaften wie beispielsweise unterschiedliche Farben aufweist.

An dem in Fig. 4 dargestelltem Beispiel könnte dies beispielsweise in der Form ausgeführt werden, als dass der linke Abschnitt des zweiten Bereiches 3 aus einem grün oder weiß eingefärbten Werkstoff besteht, während der mittlere Abschnitt des zweiten Bereiches 3 beispielsweise aus gelb eingefärbtem Werkstoff besteht. Der rechte Abschnitt des zweiten Bereiches 3 kann vorzugsweise rot oder orange eingefärbt werden, so dass bei einem beispielsweise schwarz eingefärbtem Werkstoff des ersten Bereiches 2 der Verschleißgrad anhand des Sichtbarwerdens unterschiedlicher Farben, wie unter der Beschreibung von Fig. 1 bereits ausgeführt, ohne zusätzliche Mess- oder Hilfsmittel erkannt werden kann.

Wenngleich in keiner der Figuren 1 bis 5 dargestellt, so kann mindestens ein zweiter Bereich 3 physikalische Eigenschaften aufweisen, welche nach dem Freilegen des mindestens einen zweiten Bereiches 3 infolge Verschleiß einer Funktionsfläche 4 detektierbar, vorzugsweise kontaktlos detektierbar sind.

Dies kann beispielsweise dadurch erfolgen, dass der Werkstoff mindestens eines zweiten Bereiches 3 ein besonderes optisches Reflexionsverhalten, beispielsweise in einem besonderen Frequenzbereich des sichtbaren Lichts, aufweist. Auch ist es möglich, dass durch das implementieren von zweiten Bereichen 3 aus einem metallischen Werkstoff in einen ersten Bereich 2 aus Kunststoff das Freilegen des aus metallischem Werkstoff bestehenden zweiten Bereichs 3 mit einem kapazitiven Sensor erfasst werden kann.

Hinsichtlich der Materialien, welche für den ersten Bereich 2 und für den zweiten Bereich 3 des Bauteils 1 verwendet werden können, bestehen grundsätzlich keine Einschränkungen. Diese können aus den bekannten Metallen und/oder Kunststoffen gefertigt werden.

Bei konventioneller Herstellung derartiger Teile, beispielsweise durch das Anbringen von Bohrungen unterhalb und parallel zur Verschleißfläche, können die Bohrungen mit anderen Werkstoffen, beispielsweise durch das Einfügen von Kunststoff- oder Metallstiften, ausgefüllt werden.

Wenngleich eine Herstellung eines erfindungsgemäßen Bauteils 1 mit konventionellen Herstellungsverfahren möglich ist, so besteht bei Einsatz eines additiven Herstellungsverfahrens wie dem 3D-Druck eine weitaus höhere Flexibilität und Kombinatorik bei Ausgestaltung der zweiten Bereiche 3. Ferner können mit diesem Verfahren vielzählige Kunststoffe und Metalle verarbeitet und auch miteinander kombiniert werden, so dass hiermit sowohl Bauteile 1 aus Kunststoff und/oder aus Metall hergestellt werden können.

## Patentansprüche

1. Bauteil (1) zum Einsatz in Druckmaschinen oder Papier- und Substrat-verarbeitenden Maschinen, wobei das Bauteil (1) mindestens einen ersten Bereich (2) aus einem ersten Werkstoff mit ersten physikalischen Eigenschaften umfasst, und wobei der mindestens eine erste Bereich (2) eine mit einem bahn- oder bogenförmigen Substrat in Kontakt befindliche, einem Verschleiß unterliegende Funktionsfläche (4) umfasst, wobei der mindestens eine erste Bereich (2) mindestens einen zweiten Bereich (3) umfasst, wobei angrenzend an oder beabstandet zu der Funktionsfläche (4) mindestens ein zweiter Bereich (3) zumindest teilweise von dem ersten Bereich (2) umschlossen ist, **dadurch gekennzeichnet, dass** der mindestens eine zweite Bereich (3) als Hohlraum ausgestaltet ist.

2. Bauteil (1) nach Anspruch 1, **dadurch gekennzeichnet, dass** mindestens ein zweiter Bereich (3) vollständig in den ersten Bereich (2) eingeschlossen ist.

3. Bauteil (1) nach Anspruch 1, **dadurch gekennzeichnet, dass** mindestens ein zweiter Bereich (3) sich bis zu mindestens einer von der Funktionsfläche (4) unterscheidenden Begrenzungsfläche (5) des Bauteils (1) erstreckt.

4. Bauteil (1) nach Anspruch 3, **dadurch gekennzeichnet, dass** mindestens ein zweiter Bereich (3) sich bis zu einer der Funktionsfläche (4) gegenüber liegenden Begrenzungsfläche (5) des Bauteils (1) erstreckt.

5. Bauteil (1) nach einem der Ansprüche 1 bis 4, **dadurch gekennzeichnet, dass** der mindestens eine erste Bereich (2) eine Mehrzahl von zweiten Bereichen (3) umfasst, wobei mindestens zwei zweite Bereiche (3) einen voneinander unterschiedlichen Abstand a zur Funktionsfläche (4) aufweisen.

6. Bauteil (1) nach einem der Ansprüche 1 bis 5, **dadurch gekennzeichnet, dass** mindestens ein zweiter Bereich (3) über seine Erstreckung zur Funktionsfläche (4) mit einer der Funktionsfläche (4) zugewandten Grenzfläche (6) einen veränderlichen Abstand a zur Funktionsfläche (4) aufweist.

7. Bauteil (1) nach einem der Ansprüche 1 bis 6, **dadurch gekennzeichnet, dass** mindestens ein zweiter Bereich (3) in Abhängigkeit vom Abstand a zur Funktionsfläche (4) einen veränderlichen Querschnitt bezogen auf eine Schnittebene parallel zur Funktionsfläche (4) aufweist.

## Claims

1. Component (1) for use in printing machines or paper- and substrate-processing machines, wherein the component (1) comprises at least one first region (2) made of a first material with first physical properties, and wherein the at least one first region (2) comprises a functional surface (4) which is in contact with a web or sheet-shaped substrate and is subject to wear, wherein the at least one first region (2) comprises at least one second region (3), wherein adjacent to or at a distance from the functional surface (4) at least one second region (3) is at least partially enclosed by the first region (2), **characterised in that** the at least one second region (3) is designed as a cavity.

2. Component (1) according to claim 1, **characterised in that** at least one second region (3) is completely enclosed in the first region (2).

3. Component (1) according to claim 1, **characterised in that** at least one second region (3) extends up to a boundary surface (5) of the component (1) opposite the functional surface (4).

4. Component (1) according to claim 1, **characterised in that** at least one second region (3) extends to a boundary surface (5) of the component (1) opposite the functional surface (4).

5. Component (1) according to one of claims 1 to 4, **characterised in that** the at least one first region (2) comprises a plurality of second regions (3), at least two second regions (3) having a distance a from the functional surface (4) which differs from one another.

6. Component (1) according to one of claims 1 to 5, **characterised in that** at least one second region (3) has a variable distance a from the functional surface (4) over its extension to the functional surface (4) with an interface (6) facing the functional surface (4).

7. Component (1) according to one of claims 1 to 6, **characterised in that** at least one second region (3) has a variable cross-section relative to a sectional plane parallel to the functional surface (4) as a function of the distance a from the functional surface (4).

## Revendications

1. Composant (1) destiné à être utilisé dans des machines d'impression ou des machines de traitement de papier et de substrat, le composant (1) comprenant au moins une première zone (2) en un premier matériau ayant des premières propriétés physiques, et la au moins une première zone (2) comprenant une surface fonctionnelle (4) en contact avec un substrat en forme de bande ou de feuille et soumise à l'usure, l'au moins une première zone (2) comprenant au moins une deuxième zone (3), au moins une deuxième zone (3) étant entourée au moins partiellement par la première zone (2), de manière adjacente à la surface fonctionnelle (4) ou à distance de celle-ci, **caractérisée en ce que** l'au moins une deuxième zone (3) est conçue comme un espace creux.

2. Composant (1) selon la revendication 1, **caractérisé en ce qu'**au moins une deuxième zone (3) est entièrement incluse dans la première zone (2).

3. Composant (1) selon la revendication 1, **caractérisé en ce qu'**au moins une deuxième zone (3) s'étend jusqu'à au moins une surface de délimitation (5) de l'élément de construction (1), différente de la surface fonctionnelle (4).

4. Composant (1) selon la revendication 3, **caractérisé en ce qu'**au moins une deuxième zone (3) s'étend jusqu'à une surface de délimitation (5) de l'élément de construction (1) opposée à la surface fonctionnelle (4).

5. Composant (1) selon l'une des revendications 1 à 4, **caractérisé en ce que** la au moins une première zone (2) comprend une pluralité de deuxièmes zones (3), au moins deux deuxièmes zones (3) présentant une distance a différente l'une de l'autre par rapport à la surface fonctionnelle (4).

6. Composant (1) selon l'une des revendications 1 à 5, **caractérisé en ce qu'**au moins une deuxième zone (3) présente, sur son extension vers la surface fonctionnelle (4), avec une surface limite (6) tournée vers la surface fonctionnelle (4), une distance variable a par rapport à la surface fonctionnelle (4) .

7. Composant (1) selon l'une des revendications 1 à 6, **caractérisé en ce qu'**au moins une deuxième zone (3) présente, en fonction de la distance a à la surface fonctionnelle (4), une section transversale variable par rapport à un plan de coupe parallèle à la surface fonctionnelle (4).
